Europäisches Patentamt

European Patent Office

Office européen des brevets

(11) Publication number: 0 410 722 A2

# EUROPEAN PATENT APPLICATION

(21) Application number: 90308148.7

(22) Date of filing: 25.07.90

(51) Int. Cl.5: **G11B 27/30**, G11B 20/12, G11B 20/18, H04L 1/00

(30) Priority: 26.07.89 JP 194769/89

(43) Date of publication of application:
30.01.91 Bulletin 91/05

(84) Designated Contracting States:
DE FR GB

(71) Applicant: SONY CORPORATION
7-35, Kitashinagawa 6-chome Shinagawa-ku
Tokyo(JP)

(72) Inventor: Kurose, Yoshikazu
c/o Sony corporation, 7-35, Kitashinagawa
6-chome
Shinagawa-ku, Tokyo(JP)

Inventor: Aoki, Shinji
c/o Sony corporation, 7-35, Kitashinagawa
6-chome
Shinagawa-ku, Tokyo(JP)
Inventor: Suzuki, Hideto
c/o Sony corporation, 7-35, Kitashinagawa
6-chome
Shinagawa-ku, Tokyo(JP)

(74) Representative: Ayers, Martyn Lewis Stanley
et al
J.A. KEMP & CO., 14 South Square, Grays
InnInn
London WC1R 5LX(GB)

(54) Information transmitting device.

(57) In an information transmitting device which transmits information on a preamble portion and a plurality of data blocks as one unitary set, when a block synchronising code in the data blocks is detected, the timing of the detection and the block synchronising code determined correct or subject to error correction are utilised to reproduce information contained in the preamble portion. The device is applicable, but not limited, to information recorded in a helical scan VTR format.

F I G. I

## INFORMATION TRANSMITTING DEVICE ·

This invention relates to information transmitting devices, and more particularly to an information transmitting device which is applicable to devices which are so designed as to record desired information data on a magnetic tape and reproduce them.

One example of a conventional information data recording and reproducing device which records information data with high density is the so-called "ANSI ID-1 format" (third draft Proposed American National Standard 19 mm type ID-1 Instrumentation Digital Cassette Format X3B6/88-12 Project 592-D 1988-03-22) magnetic recording and reproducing device which records and reproduces desired information data instead of digital video data and digital audio data of the so-called "SMPTE D-1 format" digital video tape recorder (digital VTR) which records component digital video signals on a magnetic tape.

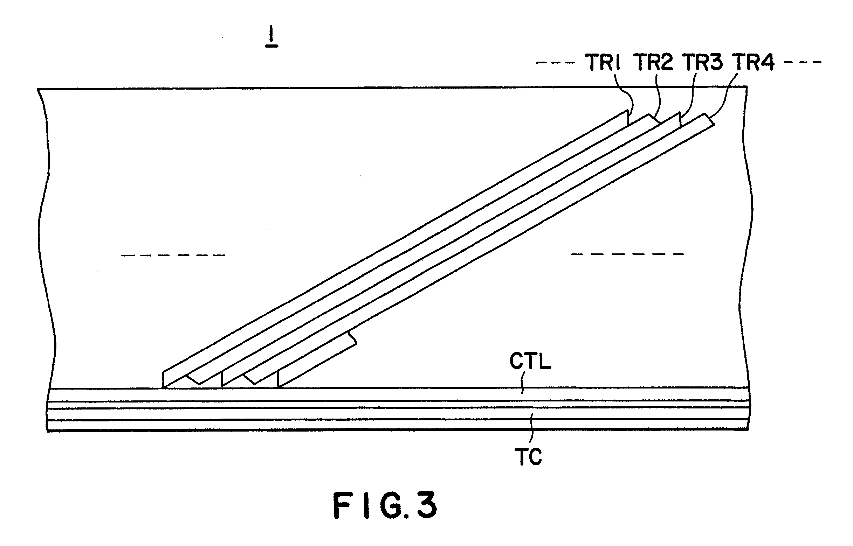

In the magnetic recording and reproducing device, as shown in figure 3 of the accompanying drawings, the magnetic tape 1 employed has a time code track TC and a control track CTL extending longitudinally along the lower edge portion of the magnetic tape. The time code track TC is for storing information to assist in editing, and the control track CTL is for tracking control. A magnetic head helically-scans the magnetic tape 1 obliquely, thus forming recording tracks TR (..., TR1, TR2, TR3, TR4, ...) having different azimuth angles.

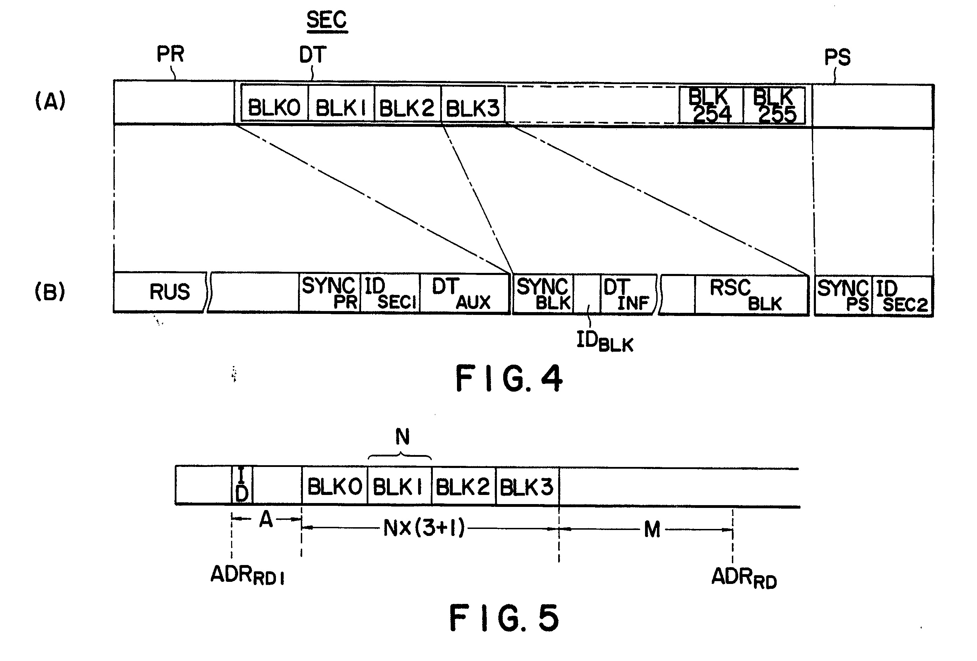

In practice, one recording track TR corresponds to one sector, a record unit, as shown in figure 4, and is made up of a preamble part PR, a record data part DT, and a postamble part PS.

The preamble part PR includes a rise sequence RUS 20 bytes in length in which a clock signal for a PLL circuit in a read circuit is written, a synchronising code $CYNC_{PR}$ 4 bytes in length, sector identifying data $D_{SEC1}$ 4 bytes in length, and extended data $DT_{AUX}$ 6 bytes in length which is provided for writing given data.

The record data part DT consists of 256 data blocks BLK (BLK0, BLK1, BLK2, ... and BLK255). Each data block BLK includes a block synchronising code $SYNC_{BLK}$ 4 bytes in length, block identifying data $ID_{BLK}$ 1 byte in length, information data $DT_{INF}$ 153 bytes in length, and a Reed-Solomon code $RSC_{BLK}$ 8 bytes in length for error detection and correction of block identifying data $ID_{BLK}$ and information data $DT_{INF}$.

The postamble part PS consists of a synchronising code $SYNC_{PS}$ 4 bytes in length, and sector identifying data $ID_{SEC2}$.

With the magnetic recording and reproducing device, it is necessary to reproduce the 4-byte sector identifying data $ID_{SEC1}$ and the 6-byte extended data $DT_{AUX}$·in the preamble part PR prior to the information data $DT_{INF}$ recorded in the record data part DT.

For this purpose, generally the 4-byte synchronising code $SYNC_{PR}$ succeeding the 20-byte rise sequence RUS is detected, and with the timing of the detection as a reference, the following 4-byte data and 6-byte data are reproduced as the sector identifying data $IS_{SEC1}$ and the extended data $DT_{AUX}$ respectively.

In this case, it is essential to correctly detect the synchronising code $SYNC_{PR}$ in the preamble part PR. If the synchronising code is not correctly detected, then it will be difficult to reproduce the sector identifying data $ID_{SEC1}$ and the extended data $DT_{AUX}$.

In practice, in each record track TR, the preamble part PR is the part where the helical-scanning magnetic head starts to abut against the magnetic tape. Hence, the preamble part PR is more susceptible to tracking and other errors than the data record part DT in the middle of the tape 1.

The ratio of the byte length of the synchronising code $SYNC_{PR}$ to the byte length of the entire preamble part PR is 4/14. When an error occurs with the preamble part PR, then the probability is extremely high that an error occurs with the synchronising code $SYNC_{PR}$; that is, the probability is high that the synchronising code $SYNC_{PR}$ is not correctly detected. Accordingly, in this case, frequently the sector identifying data $ID_{SEC1}$ and the extended data $DT_{AUX}$ are detected incorrectly.

Even in the case where the synchronising code $SYNC_{PR}$ of the preamble part PR has been detected correctly, it is not possible to verify that it is correct, because no error detecting/correcting code is employed. That is, the erroneous part may be detected as the synchronising code $SYNC_{PR}$, and the probability is correspondingly higher that the sector identifying data $ID_{SEC1}$ and the extended data $DT_{AUX}$ are erroneously reproduced.

In order to overcome this difficulty, a method has been proposed in which, if, even when an error occurs with the sector identifying data read from a sector, the preceding sectors are correct, then the current sector is also taken to be correct (Japanese patent application laid-open number 251564/1985).

However, the method may cause a serious error in reproduction of information; that is, it is still insufficient to solve the above described problem.

In view of the foregoing, an object of the invention is to provide an information transmitting device with which, when the synchronising code in a preamble part cannot be detected, the position of the preamble part is reproduced by using a block synchronising code which is obtained from the data block part through detection or correction, whereby information is obtained more positively.

According to the present invention, there is provided an information transmitting apparatus for transmitting a plurality of sets of information signals, wherein each of said sets comprises a preamble portion and a plurality of data blocks following said preamble portion, said preamble portion comprising at least a synchronising code and preamble data and each of said data blocks comprising at least a block synchronising code, block identification code and information data, said apparatus comprising:
first detecting means for detecting said synchronising code;
second detecting means for detecting said preamble data in accordance with the detection timing of said synchronising code by said first detecting means;
third detecting means for detecting said block synchronising code;
fourth detecting means for detecting said block identification code in accordance with the detection timing of said block synchronising code by said third detecting means; and
fifth detecting means for detecting said preamble data in accordance with said block identification code detected by said fourth detecting means and the detection timing of said block synchronising code by said third detecting means wherein said synchronising code is not detected by said first detecting means.

Other features of the invention are defined in the sub-claims.

The invention will be further described by way of non-limitative example with reference to the accompanying drawings, in which:-

Figure 1 is a block diagram showing the arrangement of a magnetic recording and reproducing device in one embodiment of the invention;

Figure 2 is a flow chart indicating the data processing operation of the magnetic recording and reproducing device;

Figure 3 is an explanatory diagram outlining a recording format on a magnetic tape employed in the device;

Figure 4 is an explanatory diagram showing the contents of recording tracks on the magnetic tape;

Figure 5 is an explanatory diagram showing one example of a method of obtaining a read address $AD_{RDI}$ according to the timing which is determined correct; and

Figure 6 is an explanatory diagram for a description of a search operation under a plurality of search conditions.

Preferred embodiments of this invention will be described with reference to the accompanying drawings.

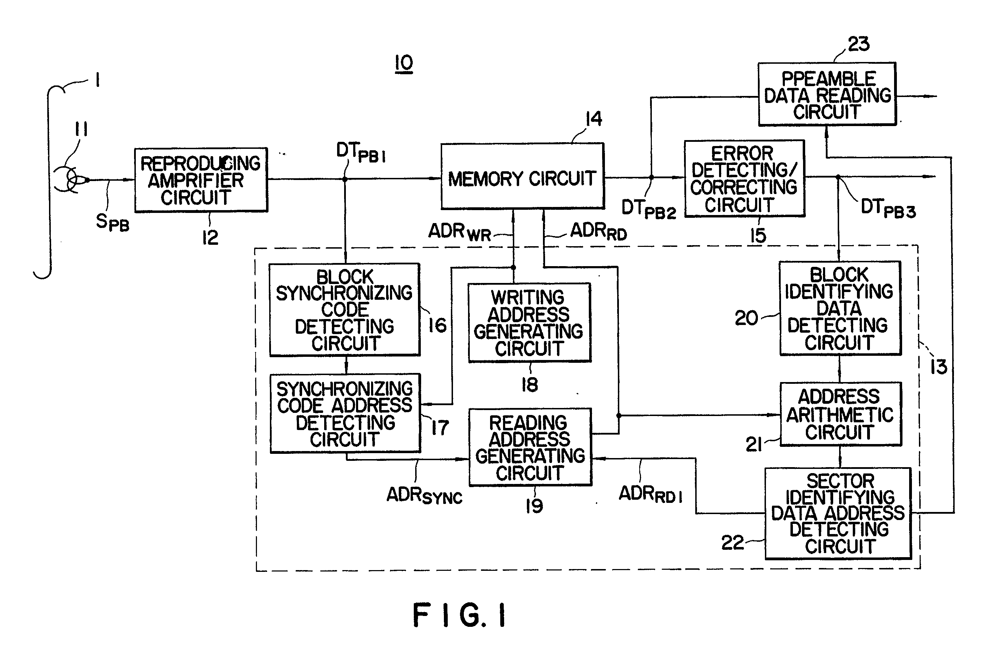

In figure 1, reference numeral 10 generally designates the reproduction system of an information transmitting device according to the invention. A magnetic head 11 helical-scans a magnetic tape 1, to output a reproducing signal $S_{PB}$. The reproducing signal is applied to a reproducing amplifier circuit 12 including an equaliser circuit and a PLL type binary coding circuit, which outputs first reproducing digital data $DT_{PB1}$ of a sector SEC. The first reproducing digital data thus output is written, in sections SEC, in predetermined addresses in a RAM (random access memory) type memory circuit 14 for every sector SEC in response to a writing address $ADR_{WR}$ provided by a memory control circuit 13.

The first reproducing digital data $DT_{PB1}$ thus written is read out of the memory circuit 14 in response to a reading address $ADR_{RD}$ provided by the memory control circuit 13, so that it is transmitted as second reproducing digital data $DT_{PB2}$ to a preamble data reading circuit 23 which is adapted to read preamble data in the preamble part; ie, sector identifying data $ID_{SEC1}$ and expansion data $DT_{AUX}$. The second reproducing digital data is applied to an error detecting/correcting circuit 15 for performing error detection and correction according to Reed-Solomon codes, where it is subjected to error correction, as a result of which it is transmitted as third reproducing digital data $DT_{PBS}$.

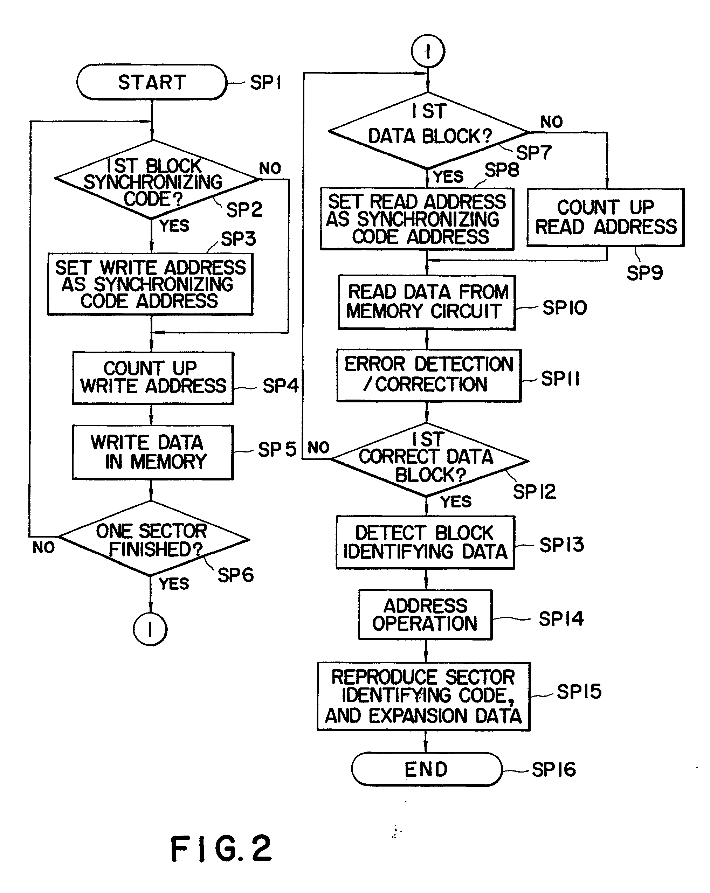

In practice, the memory control circuit 13 comprising a CPU (not shown) receives the first reproducing digital data $DT_{PB1}$ from the reproducing amplifier circuit 12 and the third reproducing digital data $DT_{PB2}$ from the error detecting/correcting circuit 15. The CPU is so designed that it operates various sections according to a sector identifying data and extended data reproducing program shown in figure 2 so that, even when the synchronising code $SYNC_{PR}$ of the preamble part PR is not detected, the sector identifying data $ID_{SEC1}$ and the extended data $DT_{AUX}$ are positively reproduced.

The first reproducing digital data $DT_{PB1}$ is applied to a block synchronising code detecting circuit 16 adapted to detect the block synchronising code $SYNC_{BLK}$ of each data block BLK in the memory control circuit 13. The result of the detection, the output of the circuit 16, is applied to a synchronising code address detecting circuit 17.

The writing address $ADR_{WR}$ produced by a writing address generating circuit 18 is applied to the synchronising code address detecting circuit 17. The latter circuit 17 detects the writing address $ADR_{WR}$ with the timing of detection of the block synchronising code $SYNC_{BLK}$ of the data block BLK, and applies it, as a synchronising code address $ADR_{SYNC'}$ to a read address generating circuit 19.

The third reproducing digital data $DT_{PBS}$ is applied to a block identifying data detecting circuit 20 adapted to detect the block identifying data $ID_{BLK}$ of each data block BLK in the memory control circuit 13. The result of the detection is applied to an address arithmetic circuit 21.

According to the writing address $ADR_{RD}$ provided by the reading address generating circuit 19, the address arithmetic circuit 21 calculates the addresses of the sector identifying data $ID_{SEC1}$ and the extended data $DT_{AUX}$ from the address of the block identifying data $ID_{BLK}$. The result of the calculation is applied to a sector identifying data address detecting circuit 22. The sector identifying data address detecting circuit 22, after data of one sector is read out of the memory circuit 14, sets in the read address generating circuit 19 the address in the memory circuit 14 in which the preamble data $ID_{SEC1}$ and expansion data $DT_{AUX}$ which are calculated according to a method described later. At the same time, the sector identifying data address detecting circuit 22 applies a signal to the preamble data reading circuit 23 to inform the latter of the timing with which preamble data is read out of the memory circuit 14. In response to the output of the read address generating circuit 19, the preamble data is read out of the memory circuit 14, and is applied to the preamble data reading circuit 23.

In the above described arrangement, upon application of the first reproducing digital data $DT_{PB1}$, in step SP2 effected after step SP1 according to the sector identifying data and extended data reproducing program the CPU determines whether or not the first reproducing digital data $DT_{PB1}$ is the block synchronising code $SYNC_{BLK}$ of the data block BLK which has been initially detected by the block synchronising code detecting circuit 16.

When the result of determination is "yes", then step SP3 the CPU stores the present writing address $ADR_{WR}$ as the synchronising code address, and in step SP4 the CPU counts up the writing address $ADR_{WR}$ provided by the writing address generating circuit 18, and writes the first reproducing digital data $DT_{PB1}$ in the memory circuits including an address corresponding to the writing address $ADR_{WR}$.

When in step SP2 the result of determination is "no", then CPU performs the operations of steps SP4 and SP5, bypassing step SP3.

Thereafter, in step SP6, the CPU determines whether or not one sector's worth of data has been inputted. When the result of this determination is "no", step SP2 is effected again, so that the CPU repeats the operations of steps SP3, SP4, SP5 and SP6.

When in step SP6 the result of the determination is "yes", then in step SP7 the CPU determines whether or not the processing is for the first synchronising block BLK. When the result of determination is "yes", in step SP8 the synchronising code address stored in step SP3 is set as the reading address $ADR_{RD}$ of the reading address generating circuit, and then step SP10 is effected.

When in step SP7 the result of determination is "no", step SP9 is effected, so that the CPU counts up the reading address $ADR_{RD}$ of the reading address generating circuit 19.

Thereafter, in step SP10 the CPU reads the content of the memory circuit 14 according to the reading address $ADR_{RD}$ to provide the second reproducing digital data $DT_{PB2}$. Then, in step SP11, the CPU causes the error detecting/correcting circuit 15 to perform an error detecting and correcting operation, and in step SP12 the CPU determines whether or not the result of operation is the data block BLK with which correct block identifying data has been detected as a result of the error detecting/correcting operation. If the result of determination is "no", then the CPU returns to step SP7 and repeats the operations of steps SP7, SP8 (SP9), SP10, SP11 and SP12.

If in step SP12, the result of its determination is "yes", then step SP13 is effected, so that the block identifying data $ID_{BLK}$ is detected by the block identifying data detecting circuit 20. Thereafter, in step SP14 an arithmetic operation is performed according to the following equation (1), and the addresses in the memory circuit 14 where the sector identifying code $ID_{SEC1}$ and the extension data $DT_{AUX}$ have been written are read out to provide a reading address $ADR_{RD1}$.

$$ADR_{RD1} = ADR_{RD} - N \times (ID_{BLK} + 1) - M - A \qquad (1)$$

In the equation (1), N is the number of words of a synchronising block BLK, M is the time required for the error detecting and correcting operation, and A is the time corresponding to the distance between the top of the first data block BLK and the sector identifying code $ID_{SEC}$ in the preamble part PR. In practice, the block identifying data $ID_{BLK}$ is provided with a value i(= 0, 1, 2, ... 255) representing its position from the top data block BLK.

Let us consider the case where, as shown in figure 5, a correct block identifying data $ID_{BLK}$ is detected from the data block BLK3. In this case, the block identifying data $ID_{BLK}$ of the data block BLK3 is determined to be correct a period of time M after all the data of the data block BLK3 has been read out of the memory circuit 14 (where M is the period of time required for the error detecting/correcting operation). With the read address $ADR_{RD}$ in this operation employed as a reference, the read address $AD_{RDI}$ corresponding to the top of the sector identifying code $ID_{SEC1}$ of the preamble part can be obtained from the following equation (2) which is obtained by substituting ($ID_{BLK}$ = 3) in the above described equation (1):

$$AD_{RD1} = ADR_{RD} - N \times (3 + 1) - M - A \quad (2)$$

Thereafter, in step SP15, the CPU sets the reading address $ADR_{RD1}$ in the reading address generating circuit 19, and makes access to the memory circuit 14 according to the reading address $ADR_{RD1}$ to reproduce the sector identifying code $ID_{SEC1}$ and the extended data $DT_{AUX}$ as the second reproducing digital data $DT_{PB2}$. Then, in step SP16, the sector identifying code and extended data reproducing program is ended.

As was described above, the magnetic recording and reproducing device 10 is so designed that the block synchronising code $SYNC_{BLK}$ in a data lock BLK of the data record part DT following the preamble part PR is detected, and the data block BLK is subject to error correction according to the error correcting code $RSC_{BLK}$, so that going back from the data block BLK including the block identifying code $ID_{BLK}$ initially detected as being correct, the sector identifying data $ID_{SEC1}$ and the extended data $DT_{AUX}$ of the preamble part PR are detected. Hence, even if the first synchronising code $SYNC_{PR}$ of the preamble part PR is not detected, the sector identifying data $ID_{SEC1}$ and the extended data $DT_{AUX}$ can be positively detected.

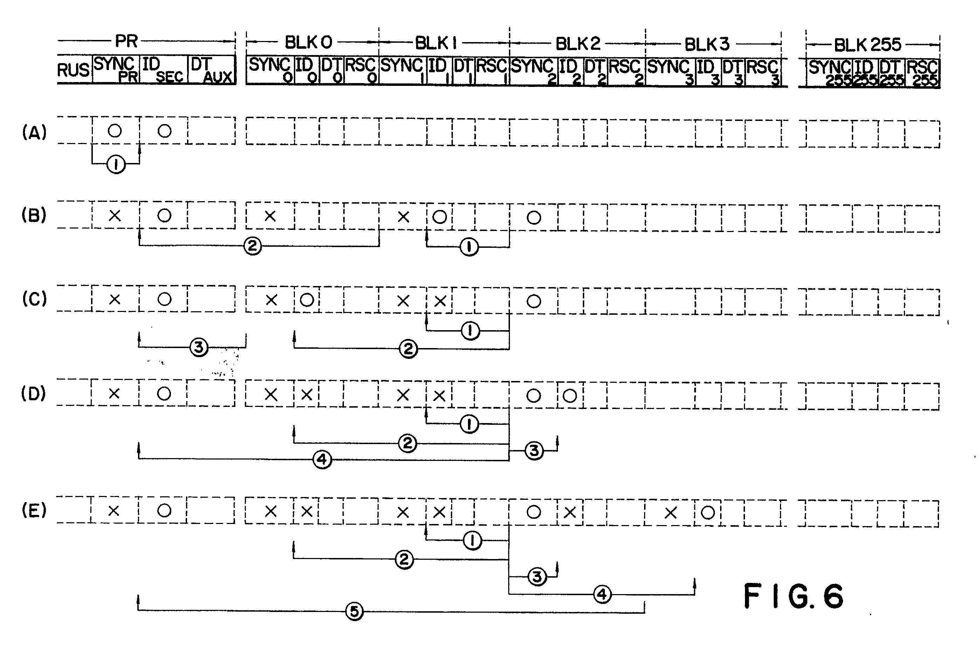

The above described operations will be described with reference to figure 6 in more detail. As shown in figure 6, one sector is made up of the preamble part PR and 256 data blocks BLK0 through BLK255 each consisting of the block synchronising code SYNC, the block identifying code ID, the information data DT and the error correction code RSC.

Here, for simplification of description, time taken to process the data and the like will be disregarded.

Part (A) of figure 6 shows the case where the synchronising code $SYNC_{PR}$ of the preamble part PR is detected. With the timing of this detection, preamble data such as the sector identifying code $ID_{SEC}$ can be read. This corresponds to the prior art for the present invention.

Next, let us consider the case where, as shown in part (B) of figure 6, the synchronising code $SYNC_{PR}$ of the preamble part PR cannot be detected, and as shown in the part (B) of figure 6 the block synchronising code SYNC is first detected at the third data block BLK2. In this case, the CPU reads the block identifying code $ID_1$ of the second data block BLK1 with the timing of detection of the block synchronising code $SYNC_{BLK2}$ of the data block BLK2. In this operation, the CPU performs an error correcting operation with the error correcting code $RSC_1$. When it is determined that the block

identifying code $ID_1$ is correct, the CPU calculates the position of the address of the top of the preamble data according to the above described equation (1) with the position of the top of the data block BLK1 as a reference, thereby to read for instance the sector identifying code $ID_{SEC}$.

In the case where, as shown in part (C) of figure 6, the block identifying code $ID_1$ is read incorrectly as a result of the error correction, similarly as in the above described case the CPU searches for the block identifying code $ID_0$ of the data block BLK0 with the timing of detection f the block synchronising code $SYNC_2$ as a reference, and perform error correction by using the error correcting code $RSC_0$. When, as a result, the block identifying code $ID_0$ is determined to be correct, the CPU reads the sector identifying code $ID_{SEC}$ of the preamble part PR with the position of the top of the data block BLK0 as a reference.

In the case of part (D) of figure 6, the block identifying codes $ID_0$ and $ID_1$ are read incorrectly, and when the block identifying code $ID_2$ is correctly detected with the timing of detection of the block synchronising code $SYNC_2$ as a reference, search is made for the sector identifying code $ID_{SEC}$ with the position of the top of the data block BLK2 as a reference.

In the case of part (B) or (C) of figure 6, when the block synchronising code $SYNC_2$ is detected, the following method may be employed: first the block identifying code $ID_2$ is read, and an error correction is performed, and when it is detected incorrectly, search is made for the block identifying code $ID_0$ or $ID_1$ of the data block BLK0 or BLK1. In this case, the order of preference of selection of the block identifying codes $ID_0$ and $ID_1$ is optional.

In the case of part (E) of figure 6, although search is made for the block identifying codes $ID_1$, $ID_0$ and $ID_2$ with the timing of detection of the block synchronising code $SYNC_2$ as a reference, the latter are detected incorrectly, and the block identifying code $ID_4$ of the block code BLK3 is detected correctly for the first time. In this case, the position of the sector identifying code $ID_{SEC}$ is calculated with the position of the top of the data block BLK3.

In the case shown in figure 6, the position of the data of the preamble part is detected with the position of the top of the data block as a reference which includes first correctly detected block identifying code; however, the invention is not limited thereto or thereby. For instance, in the case of the part (E) of figure 6, after the block identifying code $ID_3$ is detected correctly, the value obtained by subtracting one (1) from the value of the block identifying code $ID_3$ is used instead of the block identifying code $ID_2$ and the position of the top of the data block BLK2 is used as the reference timing for calculation of the position of the preamble data.

In other words, looking back from the data block BLK detected correct according to the result of the error detection and correction the sector identifying data $ID_{SEC1}$ and the extended data $DT_{AUX}$ are detected. Hence, a magnetic recording and reproducing device can be realised according to the invention in which the sector identifying data $ID_{SEC1}$ and the extended data $DT_{AUX}$ can be reproduced positively even when the synchronising code $SYNC_{PR}$ of the preamble part PR cannot be detected.

In the above described embodiment, the sector identifying data $ID_{SEC1}$ and the extended data $DT_{AUX}$ in the preamble part PR are detected according to the information of the block identifying code which has been detected correctly as a result of the error detecting/correcting operation. However, the device may be so designed that, looking back from the synchronising block detected before the error detection and correction, the sector identifying data $ID_{SEC1}$ and the extended data $DT_{AUX}$ of the preamble part PR are detected.

In the latter case, the magnetic recording and reproducing device can be greatly simplified in arrangement and in reproducing operation.

Furthermore, in the above described embodiment, the sector identifying data and the extended data are both reproduced as the preamble data; however, the same effects may be obtained by reproducing only one of those data.

While the invention has been described with reference to the ANSI ID-1 format type magnetic recording and reproducing device, it should be noted that the invention is not limited thereto or thereby. That is, the technical concept of the invention can be widely applied to reproduction of a recording medium in which a sector is recorded in the above described format. In addition, the technical concept of the invention is applicable not only to signal recording and reproducing devices but also other information transmitting devices such as wire or wireless communication means.

While there has been described in connection with the preferred embodiment of the invention, it will be obvious to those skilled in the art that various changes and modifications may be made therein without departing from the invention, and it is aimed, therefore, to cover in the appended claims all such changes and modifications as fall within the scope of the invention as defined in the appended claims.

## Claims

1. An information transmitting apparatus for transmitting a plurality of sets of information signals, wherein each of said sets comprises a preamble portion and a plurality of data blocks following said preamble portion, said preamble portion comprising at least a synchronising code and preamble data and each of said data blocks comprising at least a block synchronising code, block identification code and information data, said apparatus comprising:

first detecting means for detecting said synchronising code;

second detecting means for detecting said preamble data in accordance with the detection timing of said synchronising code by said first detecting means;

third detecting means for detecting said block synchronising code;

fourth detecting means for detecting said block identification code in accordance with the detection timing of said block synchronising code by said third detecting means; and

fifth detecting means for detecting said preamble data in accordance with said block identification code detected by said fourth detecting means and the detection timing of said block synchronising code by said third detecting means wherein said synchronising code is not detected by said first detecting means.

2. Apparatus according to claim 1, for transmitting a plurality of said sets of information signals, in which each of said data blocks comprises an error correction code for said block identification code and said information data, said apparatus comprising:

error correcting means for carrying out error correction of said block identification code according to said error correction code and outputting a corrected block identification code; and wherein

said fifth detecting means is operative to detect said preamble data in accordance with said corrected block identification code and the detection timing of said block synchronising code by said third detecting means when said synchronising code is not detected by said first detecting means.

3. Apparatus according to claim 1 or 2, and including write address generating means for generating write address;

read address generating means for generating read address;

memory means for sequentially storing said information signal in accordance with said write address and for sequentially outputting said information signal in accordance with said read address;

address storing means for storing a write address corresponding to said block synchronising code detected by said third detecting means; and

address calculating means for calculating address corresponding to said preamble data based upon said write address stored in said address storing means and said block identification code detected by said fourth detecting means; wherein said fifth detecting means is operative to receive said information signal sequentially output from said memory means and to detect said preamble data in accordance with said address calculated by said address calculating means when said synchronising means when said synchronising code is not detected by said first detecting means.

4. Apparatus according to claim 1, 2 or 3, wherein the fifth detecting means is operative to detect said preamble data in accordance with the first subsequently detected block identification code correctly detected by said fourth detecting means.

F I G. 1

START — SPI

1ST BLOCK SYNCHRONIZING CODE? — SP2
→ NO
↓ YES

SET WRITE ADDRESS AS SYNCHRONIZING CODE ADDRESS — SP3

COUNT UP WRITE ADDRESS — SP4

WRITE DATA IN MEMORY — SP5

ONE SECTOR FINISHED? — SP6
NO ←
↓ YES

Ⓘ

Ⓘ

1ST DATA BLOCK? — SP7
→ NO
↓ YES — SP8

SET READ ADDRESS AS SYNCHRONIZING CODE ADDRESS

COUNT UP READ ADDRESS — SP9

READ DATA FROM MEMORY CIRCUIT — SP10

ERROR DETECTION / CORRECTION — SP11

1ST CORRECT DATA BLOCK? — SP12
NO ←
↓ YES

DETECT BLOCK IDENTIFYING DATA — SP13

ADDRESS OPERATION — SP14

REPRODUCE SECTOR IDENTIFYING CODE, AND EXPANSION DATA — SP15

END — SP16

# FIG. 2

9

**FIG.3**

EP 0 410 722 A2

SEC

(A)

PR

DT

PS

| BLK0 | BLK1 | BLK2 | BLK3 | | BLK 254 | BLK 255 |

(B)

| RUS | | SYNC PR | ID SEC1 | DT AUX | SYNC BLK | DT INF | RSC BLK | SYNC PS | ID SEC2 |

ID$_{BLK}$

# F I G. 4

N

| | I D | | BLK0 | BLK1 | BLK2 | BLK3 | |

|← A →|

—— N×(3+1) ——

— M —

ADR$_{RD1}$

ADR$_{RD}$

# F I G. 5

EP 0 410 722 A2

PR — BLK 0 — BLK 1 — BLK 2 — BLK 3 — BLK 255

| RUS | SYNC PR | ID SEC | DT AUX | SYNC 0 | ID 0 | DT 0 | RSC 0 | SYNC 1 | ID 1 | DT 1 | RSC 1 | SYNC 2 | ID 2 | DT 2 | RSC 2 | SYNC 3 | ID 3 | DT 3 | RSC 3 | SYNC 255 | ID 255 | DT 255 | RSC 255 |

(A)

(B)

(C)

(D)

(E)

FIG. 6